# EUROPÄISCHE PATENTANMELDUNG

(11) **EP 2 009 777 A2**
(43) Veröffentlichungstag der Anmeldung: **31.12.2008**
(21) Anmeldenummer: 08103701.2
(22) Anmeldetag: 24.04.2008
(51) Int. Cl.: H02M 3/158

(54) **Getaktete Stromversorgung**

(30) Priorität: 28.06.2007 AT 9982007
(71) Anmelder: Siemens Aktiengesellschaft Österreich, 1210 Wien (AT)
(72) Erfinder: Hallak, Jalal, 1220, Wien (AT)
(74) Vertreter: Maier, Daniel Oliver

(57) **Zusammenfassung**

Die Erfindung betrifft eine getaktete Stromversorgung, welche einen ersten Leistungsteil (LT1) und einen Kontroller (K, PWM-K) zur Regelung einer Ausgangsspannung (U_{OUT}) und/oder eines Ausgangsstromes (I₁, I₂, I_{ges}) in Abhängigkeit einer ausgangsseitig angeschlossenen Last (L) und einer eingangsseitig anliegenden Eingangsspannung (U_{IN}) umfasst, wobei ein zweiter Leistungsteil (LT2) mit dem ersten Leistungsteil (LT1) eine Parallelschaltung bildet, sodass sich ein Gesamtausgangsstrom (I_{ges}) der Stromversorgung aus einem ersten Ausgangsstrom (I₁) des ersten Leistungsteils (LT1) und einem zweiten Ausgangsstrom (I₂) des zweiten Leistungsteils (LT2) zusammensetzt. Dabei ist ein Hauptkontroller (HK) zur Erzeugung eines ersten pulsweitenmodulierten Signals (PWM1) zur Ansteuerung des ersten Leistungsteils (LT1) vorgesehen. Des Weiteren ist ein Subkontroller (SK) vorgesehen, welchem das erste pulsweitenmodulierte Signal (PWM1) und ein der Differenz zwischen erstem und zweitem Ausgangsstrom (I₁, I₂) proportionales Differenzsignal zugeführt sind und an dessen Ausgang ein zweites pulsweitenmoduliertes Signal (PWM2) zur Ansteuerung des zweiten Leistungsteils (LT2) abgreifbar ist.

## Beschreibung

Die Erfindung betrifft eine getaktete Stromversorgung, welche einen ersten Leistungsteil und einen Kontroller zur Regelung einer Ausgangsspannung und/oder eines Ausgangsstromes in Abhängigkeit einer ausgangsseitig angeschlossenen Last und einer eingangsseitig anliegenden Eingangsspannung umfasst, wobei ein zweiter Leistungsteil mit dem ersten Leistungsteil eine Parallelschaltung bildet, sodass sich ein Gesamtausgangsstrom der Stromversorgung aus einem ersten Ausgangsstrom des ersten Leistungsteils und einem zweiten Ausgangsstrom des zweiten Leistungsteils zusammensetzt. Des Weiteren betrifft die Erfindung ein Verfahren zum Betreiben einer getakteten Stromversorgung.

Getaktete Stromversorgungen dienen der Verbindung von Lasten oder Versorgungsnetzen mit Strom- oder Spannungsquellen. In der Regel umfasst eine getaktete Stromversorgung einen Leistungsteil und einen Kontroller zur Ansteuerung des Leistungsteils. Ein Leistungsteil besteht im Wesentlichen aus einem Wandler, wobei unterschiedliche Ausprägungen wie zum Beispiel Sperrwandler, Flusswandler, Gegentaktwandler, Aufwärtswandler, Abwärtswandler etc. bekannt sind. Abhängig von der eingangsseitig und ausgangsseitig auftretenden Stromform unterscheidet man des Weiteren zum Beispiel Gleichstrom-Gleichstrom-Wandler (DC-DC-Wandler), Wechselstrom-Gleichstrom-Wandler (AC-DC-Wandler) oder Gleichstrom-Wechselstrom-Wandler (DC-AC-Wandler).

Zur Anbindung von Gleichspannungslasten an ein Wechselspannungsnetz kommt ein AC-DC-Wandler zum Einsatz, wobei mittels Kontroller die Ausgangsspannung in Abhängigkeit von der Last und der Eingangsspannung geregelt wird.

Bei der Anbindung eines Wechselstromnetzes an eine Stromquelle wie beispielsweise eine Photovoltaik- oder eine Brennstoffzelle kommen DC-AC-Wandler (Wechselrichter) zum Einsatz. Dabei regelt der Kontroller den Ausgangsstrom in Abhängigkeit der eingangsseitig zur Verfügung stehenden Energie.

Jeder getaktete Wandler umfasst zumindest ein Schaltelement, das mit hoher Frequenz ein- und ausgeschaltet wird, wobei induktive und/oder kapazitive Elemente zyklisch auf- und entladen werden. Die dabei vom Eingang des Wandlers zum Ausgang des Wandlers übertragene Energie bestimmt sich in der Regel aus dem Tastverhältnis eines pulsweitenmodulierten Signals (PWM-Signal), das mittels Kontroller erzeugt wird, wobei die Einschalt- und Ausschaltflanken dieses PWM-Signals die Einschalt- und Ausschaltzeitpunkte des Schaltelements vorgeben.

Die übertragbare Energie ist durch die Eigenschaften der Elemente des Leistungsteils begrenzt. Getaktete Stromversorgungen werden deshalb als Baureihen mit unterschiedlichen Nennleistungen angeboten. Mit der Leistungsstärke steigt auch der Preis der Stromversorgungen, weshalb ist es oft günstiger ist, zwei Stromversorgungen geringer Leistung parallel zu schalten, wobei sich die erzielbare Übertragungsleistung als Summe der einzelnen Nennleistungen ergibt. Eine derartige Parallelschaltung zweier getakteter Schaltnetzteile kommt auch dort zum Einsatz, wo die physischen Grenzen der Elemente eines Leistungsteils keine Skalierung nach oben mehr zulassen.

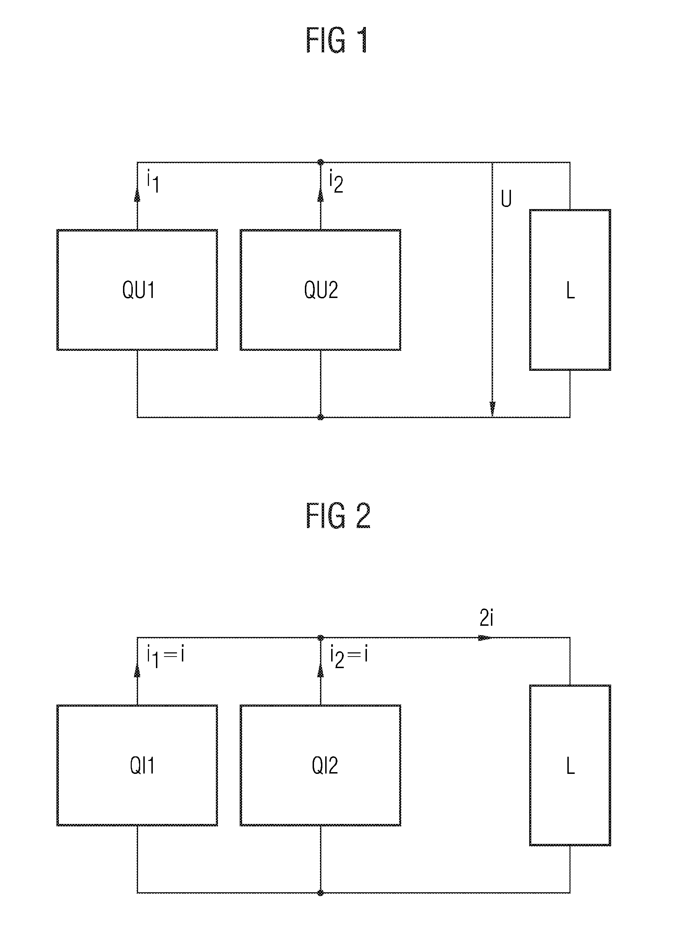

Bei der Parallelschaltung zweier Stromversorgungen wird jeder Leistungsteil von einem eigenen Kontroller angesteuert. Wird dabei eine Last an zwei Spannungsquellen geschaltet, stellen sich unterschiedliche Belastungen der beiden Stromversorgungen ein. Nur bei Volllast und einer Strombegrenzung der Leistungsteile sind die beiden Ausgangsströme der Leistungsteile annähernd gleich groß (vgl. Fig. 1).

Bei der Anschaltung einer Last oder eines Versorgungsnetzes an zwei Stromquellen mittels zweier als Wechselrichter ausgebildeten Stromversorgungen sind die beiden Ausgangsströme gleich groß, wenn jedem Kontroller der gleiche Sollwert zur Regelung des Ausgangsstromes vorgegeben wird (vgl. Fig. 2).

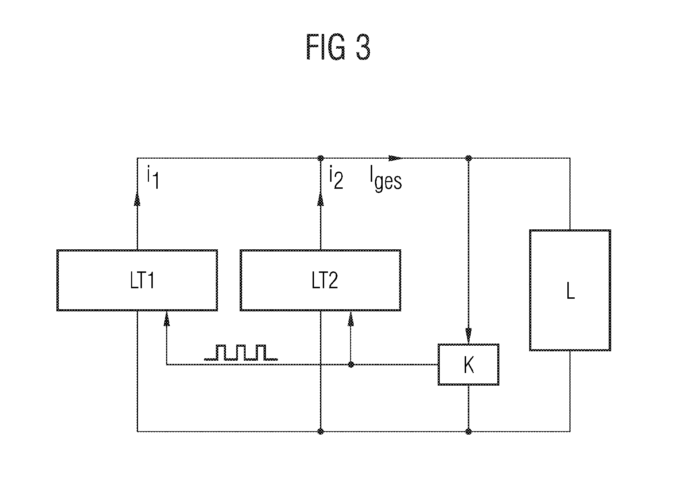

Neben der Parallelschaltung zweier Stromversorgungen kennt man auch Anordnungen, die zwei Leistungsteile und einen gemeinsamen Kontroller umfassen. Dabei wird zur Ansteuerung der parallel geschalteten Leistungsteile nur ein pulsweitenmoduliertes Signal vorgegeben. Toleranzen und Temperaturdriften in den Leistungsteilen führen bei einer derartigen Anordnung dazu, dass die Ausgangsströme der beiden Leistungsteile nicht gleich sind (vgl. Fig. 3).

Diese Ungleichheit der Ausgangsströme bewirkt, dass bei steigender Gesamtleistung ein Leistungsteil vor dem anderen die maximal zulässige Belastung erreicht. Dadurch wird die Leistung des anderen Leistungsteils begrenzt, bevor dessen maximale zulässige Belastung erreicht wird. Die maximal übertragbare Gesamtleistung der Parallelschaltung der Leistungsteile ist demnach geringer als die Summe der beiden maximal zulässigen Leistungen der Leistungsteile.

Der Erfindung liegt die Aufgabe zugrunde, für eine Stromversorgung der eingangs genannten Art eine Verbesserung gegenüber dem Stand der Technik anzugeben.

Erfindungsgemäß wird diese Aufgabe gelöst durch eine getaktete Stromversorgung, welche einen ersten Leistungsteil und einen Kontroller zur Regelung einer Ausgangsspannung und/oder eines Ausgangsstromes in Abhängigkeit einer ausgangsseitig angeschlossenen Last und einer eingangsseitig anliegenden Eingangsspannung umfasst, wobei ein zweiter Leistungsteil mit dem ersten Leistungsteil eine Parallelschaltung bildet, sodass sich ein Gesamtausgangsstrom der Stromversorgung aus einem ersten Ausgangsstrom des ersten Leistungsteils und einem zweiten Ausgangsstrom des zweiten Leistungsteils zusammensetzt. Dabei ist der Kontroller als Hauptkontroller ausgebildet, welchem ein der Ausgangsspannung proportionales Messsignal, ein der Eingangsspannung proportionales Messsignal und ein einem Ausgangsstrom proportionales Messsignal zugeführt sind und an dessen Ausgang ein erstes pulsweitenmoduliertes Signal zur Ansteuerung des ersten Leistungsteils abgreifbar ist. Zudem ist ein Subkontroller vorgesehen, welchem das erste pulsweitenmodulierte Signal und ein der Differenz zwischen erstem und zweitem Ausgangsstrom proportionales Differenzsignal zugeführt sind und an dessen Ausgang ein zweites pulsweitenmoduliertes Signal zur Ansteuerung des zweiten Leistungsteils abgreifbar ist.

Die Regelung der Spannung oder des Stromes am Ausgang der aus den beiden Leistungsteilen gebildeten Parallelschaltung erfolgt dabei in einfacher Weise mittels eines Kontrollers, nämlich des Hauptkontrollers. Das entsprechende erste pulsweitenmodulierte Signal wird mittels Hauptkontroller erzeugt und einem ersten Leistungsteil zugeführt. Der Subkontroller verändert das erste pulsweitenmodulierte Signal zu einem zweiten pulsweitenmodulierten Signal, welches dem zweiten Leistungsteil zugeführt wird. Die Veränderung erfolgt dabei in Abhängigkeit der Differenz zwischen erstem und zweitem Ausgangsstrom am Ausgang der einzelnen Leistungsteile. Die Regelungsgeschwindigkeit des Subkontrollers ist dabei von untergeordneter Bedeutung, sodass nur der Hauptkontroller eine dem Schwankungsverhalten einer angeschlossenen Last oder der Eingangsspannung angepasste Regelungsgeschwindigkeit aufweisen muss.

In einer vorteilhaften Ausprägung der Erfindung ist vorgesehen, dass eine erste Strommesseinrichtung zur Erfassung des ersten Ausgangsstromes und eine zweite Strommesseinrichtung zur Erfassung des zweiten Ausgangsstromes angeordnet sind und dass eine Subtraktionseinheit vorgesehen ist, der die Messsignale der beiden Strommesseinrichtungen zugeführt sind und an deren Ausgang ein Differenzsignal der beiden Messsignale abgreifbar ist. Derartige Subtraktionseinheiten sind einfach aufgebaut und liefern am Ausgang das erforderliche Differenzsignal für den Subkontroller.

In einer anderen Ausprägung der Erfindung ist vorgesehen, dass eine erste Strommesseinrichtung zur Erfassung des ersten oder des zweiten Ausgangsstromes und eine zweite Strommesseinrichtung zur Erfassung des Gesamtausgangsstromes angeordnet sind und dass eine Subtraktionsschaltung vorgesehen ist, der die Messsignale zugeführt sind und an deren Ausgang ein Differenzsignal proportional zur Differenz zwischen dem doppelten ersten oder zweiten Ausgangsstrom und dem Gesamtausgangsstrom abgreifbar ist. Das ist vor allem dann vorteilhaft, wenn ein dem Gesamtausgangsstrom am Ausgang der Parallelschaltung der beiden Leistungsteile proportionales Messsignal auch für andere Schaltaufgaben erforderlich ist, beispielsweise als Sollwert für die Regelungsaufgabe des Hautpkontrollers.

Günstig ist es, wenn die Strommesseinrichtungen als Stromwandler ausgeführt sind. Stromwandler sind für große Messbereiche verfügbar und können in einfacher Weise in Schaltungen integriert werden.

Für die verschiedenen Ausprägungen der Erfindung ist des Weiteren vorgesehen, dass die Leistungsteile als AC-DC-Wandler oder als DC-DC-Wandler oder als DC-AC-Wandler ausgebildet sind. Die Vorteile der Erfindung sind somit für unterschiedliche Arten von Wandlern nutzbar.

Bei einem besonders einfachen Aufbau der getakteten Stromversorgung ist der Subkontroller im Hauptkontroller integriert.

Die Erfindung betrifft des Weitern ein Verfahren zum Betreiben einer erfindungsgemäßen Stromversorgung, wobei mittels Hauptkontroller ein erstes pulsweitenmoduliertes Signal in Abhängigkeit der Eingangsspannung, der Ausgangsspannung und eines gemessenen Ausgangsstromes bebildet wird und wobei mittels Subkontroller aus diesem ersten pulsweitenmodulierten Signal in Abhängigkeit der Differenz zwischen erstem und zweitem Ausgangsstrom ein zweites pulsweitenmoduliertes Signal in der Weise gebildet wird, dass das Tastverhältnis des zweiten pulsweitenmodulierten Signals gegenüber dem Tastverhältnis des ersten pulsweitenmodulierten Signals verkleinert wird, wenn der zweite Ausgangsstrom größer als der erste Ausgangsstrom ist und dass das Tastverhältnis des zweiten pulsweitenmodulierten Signals gegenüber dem Tastverhältnis des ersten pulsweitenmodulierten Signals vergrößert wird, wenn der zweite Ausgangsstrom kleiner als der erste Ausgangsstrom ist.

Auf diese Weise werden die Schaltelemente in den beiden Leistungsteilen pro Schaltzyklus unterschiedlich lange eingeschaltet. Zur Kompensation der Toleranzen und der Temperaturdrift der beiden Leistungsteile wird so eine laufende Angleichung der beiden Ausgangsströme an den Ausgängen der Leistungsteile erreicht.

Dabei ist es vorteilhaft, wenn das erste pulsweitenmodulierte Signal in Abhängigkeit der Eingangsspannung, der Ausgangsspannung und des Gesamtausgangsstromes gebildet wird um schnell auf Laständerungen oder auf Änderungen der Eingangsspannung zu reagieren.

Eine einfache Ausprägung des Verfahrens sieht vor, dass das Tastverhältnis des zweiten pulsweitenmodulierten Signals gegenüber dem Tastverhältnis des ersten pulsweitenmodulierten Signals in der Weise geändert wird, dass die Ausschaltflanken des zweiten pulsweitenmodulierten Signals gegenüber den Ausschaltflanken des ersten pulsweitenmodulierten Signals voreilen oder nacheilen. Die Einschaltzeitpunkte der Schaltelemente in den beiden Leistungsteilen bleiben dabei unverändert.

Um am Ausgang der aus den Leistungsteilen gebildeten Parallelschaltung einen kleinen Stromrippel zu erzielen ist es zudem von Vorteil, wenn das erste pulsweitenmodulierte Signal und das zweite pulsweitenmodulierte Signal zeitlich versetzt zueinander vorgegeben werden. Dabei beginnt beispielsweise ein Schaltzyklus des zweiten Leistungsteils immer nach Ablauf des halben Schaltzyklus des ersten Leistungsteils, wenn die beiden pulsweitenmodulierten Signale um eine halbe Periodendauer versetzt sind. Die Rippel der beiden Ausgangsströme an den Ausgängen der Leistungsteile gleichen sich dabei zum Teil aus, sodass ein kleiner Ausgangsfilter einsetzbar ist.

Die Erfindung wird nachfolgend in beispielhafter Weise unter Bezugnahme auf die beigefügten Figuren erläutert. Es zeigen in schematischer Darstellung:
- Fig. 1: Parallelschaltung von zwei geregelten Spannungsquellen
- Fig. 2: Parallelschaltung von zwei geregelten Stromquellen
- Fig. 3: Parallelschaltung von zwei Leistungsteilen mit einem Kontroller
- Fig. 4: Parallelschaltung von zwei Leistungsteilen mit Hauptkontroller und Subkontroller
- Fig. 5: Verlauf der beiden pulsweitenmodulierten Signale an den Ausgängen des Haupt- und Subkontrollers

Die ersten drei Figuren zeigen Anordnungen nach dem Stand der Technik. In Figur 1 ist ein Ersatzschaltbild für die Anschaltung einer Last L an ein Spannungsnetz mittels zweier Stromversorgungen dargestellt. Die Last L ist dabei parallel zu zwei geregelten Spannungsquellen QU1, QU2 geschaltet. Da für die Spannungsquellen QU1, QU2 die gemeinsamen Spannung U die Regelgröße darstellt, sind die Ausgangsströme i₁, i₂ nur dann annähernd gleich, wenn Volllast herrscht und für jede Spannungsquelle die gleiche Strombegrenzung vorgegeben ist. Abgesehen von diesem Volllastzustand sind die Stromversorgungen unterschiedlich belastet.

Eine gleichmäßige Belastung erhält man hingegen, wenn zwei Stromquellen QI1, QI2 parallel an eine Last L angeschaltet sind. Das ist zum Beispiel der Fall, wenn zwei Photovoltaikzellen mittels zweier Wechselrichter mit einem Spannungsnetz verbunden sind. Ein entsprechendes Ersatzschaltbild ist in Figur 2 dargestellt. Jeder Wechselrichter umfasst dabei einen eigenen Kontroller, der den Strom am Ausgang des jeweiligen Wechselrichters i₁, i₂ einem gemeinsamen Sollstrom i nachregelt.

Eine einfachere bekannte Anordnung sieht vor, dass zwei Leistungsteile LT1, LT2 mit nur einem Kontroller K angesteuert werden, wie in Figur 3 dargestellt. Der Kontroller K erzeugt dann ein pulsweitenmoduliertes Signal für beide Leistungsteile LT1, LT2. Dabei besteht der Nachteil, dass die Ausgangsstrome I1, I2 der beiden Leistungsteile LT1, LT2 aufgrund von Toleranzen und Temperaturdrift nicht gleich sind. Es können somit nicht beide Leistungsteile bis zur zulässigen Leistungsgrenze betrieben werden.

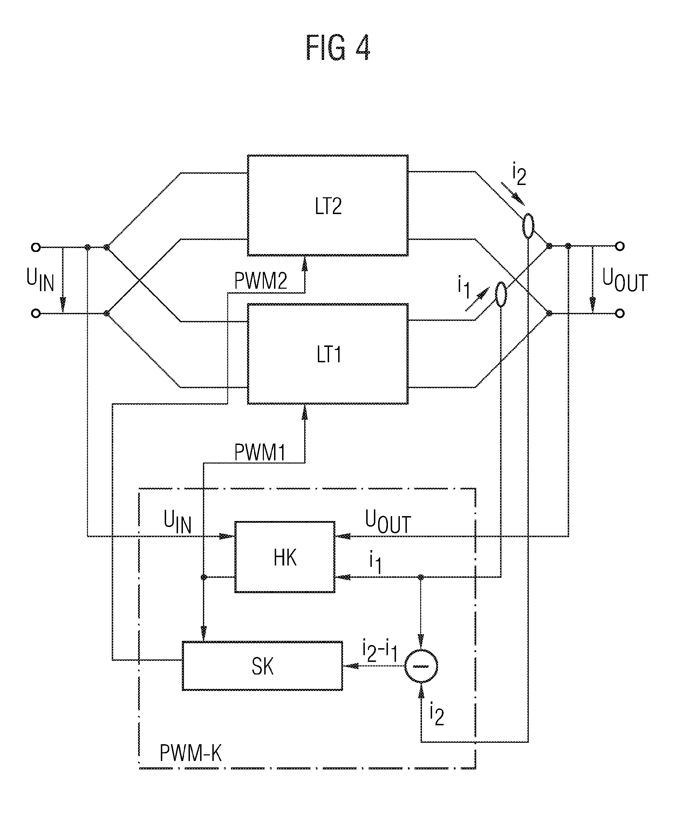

Dieser Nachteil wird mittels einer erfindungsgemäßen Stromversorgung überwunden. Eine beispielhafte Anordnung ist in Figur 4 dargestellt. Dabei sind zwei Leistungsteile LT1, LT2 parallel an eine Eingangsspannung U_{IN} angeschaltet. Am Ausgang dieser Parallelschaltung liegt die Ausgangsspannung U_{OUT} an.

Angesteuerte werden die beiden Leistungsteile LT1, LT2 mittels eines gemeinsamen Kontrollers PWM-K, welcher einen Hauptkontroller HK und eine Subkontroller SK umfasst. Dem Hauptkontroller HK sind ein Messsignal der Ausgangsspannung U_{OUT}, ein Messsignal des ersten Ausgangsstrom i₁ am Ausgang des ersten Leistungsteils LT1 und ein Messsignal der Eingangsspannung U_{IN} zugeführt. Aus diesen Eingangssignalen erzeugt der Hauptkontroller HK das erste pulsweitenmodulierte Signal PWM1, mittels dem der erste Leistungsteil LT1 angesteuert wird.

Das erste pulsweitenmodulierte Signal PWM1 ist auch dem Subkontroller SK zugeführt. Der Subkontroller SK verändert dieses erste pulsweitenmodulierte Signal PWM1 in Abhängigkeit von der Differenz der beiden Ausgangsspannungen i₂-i₁ der Leistungsteile LT1, LT2 zu einem zweiten pulsweitenmodulierten Signal PWM2. Zu diesem Zweck ist im Kontroller PWM-K eine Subtraktionseinheit vorgesehen, welche aus den Messsignalen des ersten und des zweiten Ausgangsstromes i₁, i₂ ein Differenzsignal i₂-i₁ bildet und dem Subkontroller SK zuführt. Mittels zweitem pulsweitenmodulierten Signal PWM2 wird der zweite Leistungsteil LT2 angesteuert.

Bei veränderter Last L oder schwankender Eingangsspannung U_{IN} wird also zunächst für beide Leistungsteile LT1, LT2 das Testverhältnis des ersten pulsweitenmodulierten Signals PWM1 mittels Hauptkontroller HK angepasst. Dabei wird nur einem Leistungsteil LT1 das erste pulsweitenmodulierte Signal PWM1 direkt zugeführt. Für den zweiten Leistungsteil LT2 erfolgt eine weitere Anpassung mittels Subkontroller SK, welcher aus dem ersten pulsweitenmodulierten Signal PWM1 das zweite pulsweitenmodulierte Signal PWM2 erzeugt.

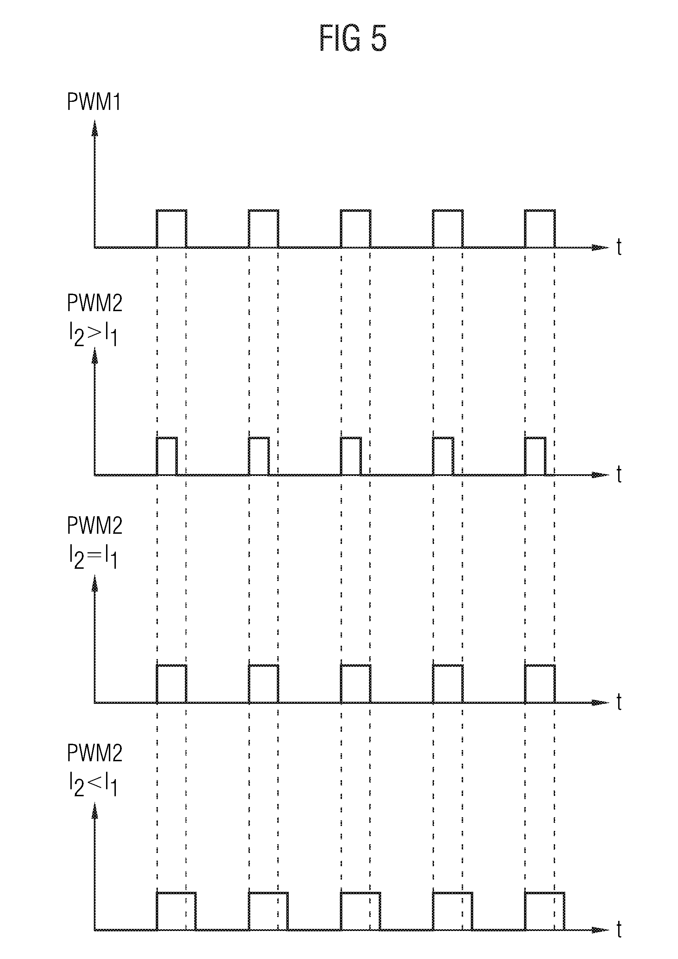

In Figur 5 ist ein beispielhafter Verlauf der beiden pulsweitenmodulierten Signale PWM1, PWM2 für unterschiedliche Zustände der beiden Leistungsteile LT1, LT2 dargestellt.

Das obere Diagramm zeigt das erste pulsweitenmodulierte Signal PWM1 über der Zeit t, wie es abhängig von den Lastverhältnissen mittels Hauptkontroller HK vorgegeben wird. Darunter sind drei unterschiedliche Verläufe des zweiten pulsweitenmodulierten Signals über der Zeit t dargestellt.

Nach dem Hochfahren der Stromversorgung werden beide Leistungsteile LT1, LT2 zunächst mit demselben Tastverhältnis betrieben, die beiden pulsweitenmodulierten Signale PWM1 und PWM2 sind also gleich. Der Verlauf des zweiten pulsweitenmodulierten Signals PWM2 ist im dritten Diagramm der Figur 5 dargestellt.

Für den Fall, dass aufgrund der Toleranzen und der Temperaturdrift in den Leistungsteilen LT1, LT2 der zweite Ausgangsstrom I₂ am Ausgang des zweiten Leistungsteils LT2 größer als der erste Ausgangsstrom I₁ am Ausgang des ersten Leistungsteils LT1 wird, gibt der Subkontroller SK ein zweites pulsweitenmoduliertes Signals PWM2 mit verringertem Tastverhältnis vor. Dabei eilen die Ausschaltflanken des zweiten pulsweitenmodulierten Signals PWM2 jenen des ersten pulsweitenmodulierten Signals PWM1 voraus, wie im zweiten Diagramm in Figur 5 dargestellt.

Wird der zweite Ausgangsstrom I₂ jedoch schwächer als der erste Ausgangsstrom I₁, gibt der Subkontroller SK ein zweites pulsweitenmoduliertes Signal PWM2 mit größerem Tastverhältnis vor. Die Ausschaltflanken des zweiten pulsweitenmodulierten Signals PWM2 eilen also jenen des ersten pulsweitenmodulierten Signals PWM1 nach, wie im untersten Diagramm in Figur 5 dargestellt.

Die Veränderung des zweiten pulsweitenmodulierten Signals PWM2 erfolgt zum Beispiel in der Weise, dass in vorgegeben Abständen, z.B. nach fünf Schaltzyklen, entsprechend der erfassten Differenz zwischen den beiden Ausgangsströmen I₁, I₂ eine Multiplikation der Einschaltzeit mit einem Faktor größer oder kleiner eins erfolgt. Dieser Multiplikationsfaktor kann dabei proportional zur Differenz der beiden Ausgangsströme I₁, I₂ vorgegeben werden.

## Patentansprüche

1. Getaktete Stromversorgung, welche einen ersten Leistungsteil (LT1) und einen Kontroller (K, PWM-K) zur Regelung einer Ausgangsspannung (U_{OUT}) und/oder eines Ausgangsstromes (I₁, I₂, I_{ges}) in Abhängigkeit einer ausgangsseitig angeschlossenen Last (L) und einer eingangsseitig anliegenden Eingangsspannung (U_{IN}) umfasst, wobei ein zweiter Leistungsteil (LT2) mit dem ersten Leistungsteil (LT1) eine Parallelschaltung bildet, sodass sich ein Gesamtausgangsstrom (I_{ges}) der Stromversorgung aus einem ersten Ausgangsstrom (I₁) des ersten Leistungsteils (LT1) und einem zweiten Ausgangsstrom (I₂) des zweiten Leistungsteils (LT2) zusammensetzt, **dadurch gekennzeichnet, dass** der Kontroller (PWM-K) als Hauptkontroller (HK) ausgebildet ist, welchem ein der Ausgangsspannung (U_{OUT}) proportionales Messsignal, ein der Eingangsspannung (U_{IN}) proportionales Messsignal und ein einem Ausgangsstrom (I₁, I₂, I_{ges}) proportionales Messsignal zugeführt sind und an dessen Ausgang ein erstes pulsweitenmoduliertes Signal (PWM1) zur Ansteuerung des ersten Leistungsteils (LT1) abgreifbar ist und dass zudem ein Subkontroller (SK) vorgesehen ist, welchem das erste pulsweitenmodulierte Signal (PWM1) und ein der Differenz zwischen erstem und zweitem Ausgangsstrom (I₁, I₂) proportionales Differenzsignal zugeführt sind und an dessen Ausgang ein zweites pulsweitenmoduliertes Signal (PWM2) zur Ansteuerung des zweiten Leistungsteils (LT2) abgreifbar ist.

2. Getaktete Stromversorgung nach Anspruch 1, **dadurch gekennzeichnet, dass** eine erste Strommesseinrichtung zur Erfassung des ersten Ausgangsstromes (I₁) und eine zweite Strommesseinrichtung zur Erfassung des zweiten Ausgangsstromes (I₂) angeordnet sind und dass eine Subtraktionseinheit vorgesehen ist, der die Messsignale der beiden Strommesseinrichtungen zugeführt sind und an deren Ausgang ein Differenzsignal der beiden Messsignale abgreifbar ist.

3. Getaktete Stromversorgung nach Anspruch 1, **dadurch gekennzeichnet, dass** eine erste Strommesseinrichtung zur Erfassung des ersten oder des zweiten Ausgangsstromes (I₁, I₂) und eine zweite Strommesseinrichtung zur Erfassung des Gesamtausgangsstromes (Igₑₛ) angeordnet sind und dass eine Subtraktionsschaltung vorgesehen ist, der die Messsignale zugeführt sind und an deren Ausgang ein Differenzsignal proportional zur Differenz zwischen dem doppelten ersten oder zweiten Ausgangsstrom (I₁, I₂) und dem Gesamtausgangsstrom (I_{ges}) abgreifbar ist.

4. Getaktete Stromversorgung nach Anspruch 2 oder 3, **dadurch gekennzeichnet, dass** die Strommesseinrichtungen als Stromwandler ausgeführt sind.

5. Getaktete Stromversorgung nach einem der Ansprüche 1 bis 4, **dadurch gekennzeichnet, dass** die Leistungsteile (LT1, LT2) als AC-DC-Wandler oder als DC-DC-Wandler oder als DC-AC-Wandler ausgebildet sind.

6. Getaktete Stromversorgung nach einem der Ansprüche 1 bis 4, **dadurch gekennzeichnet, dass** der Subkontroller (SK) im Hauptkontroller (HK) integriert ist.

7. Verfahren zum Betreiben einer getakteten Stromversorgung nach einem der Ansprüche 1 bis 6, **dadurch gekennzeichnet, dass** mittels Hauptkontroller (HK) ein erstes pulsweitenmoduliertes Signal (PWM1) in Abhängigkeit der Eingangsspannung (U_{IN}), der Ausgangsspannung (U_{OUT}) und eines gemessenen Ausgangsstromes (I₁, I₂, I_{ges}) gebildet wird und dass mittels Subkontroller (SK) aus diesem ersten pulsweitenmodulierten Signal (PWM1) in Abhängigkeit der Differenz zwischen erstem und zweitem Ausgangsstrom (I₁, I₂) ein zweites pulsweitenmoduliertes Signal (PWM2) in der Weise gebildet wird, dass das Tastverhältnis des zweiten pulsweitenmodulierten Signals (PWM2) gegenüber dem Tastverhältnis des ersten pulsweitenmodulierten Signals (PWM1) verkleinert wird, wenn der zweite Ausgangsstrom (I₂) größer als der erste Ausgangsstrom (I₁) ist und dass das Tastverhältnis des zweiten pulsweitenmodulierten Signals (PWM2) gegenüber dem Tastverhältnis des ersten pulsweitenmodulierten Signals (PWM1) vergrößert wird, wenn der zweite Ausgangsstrom (I₂) kleiner als der erste Ausgangsstrom (I₁) ist.

8. Verfahren nach Anspruch 7, **dadurch gekennzeichnet, dass** das erste pulsweitenmodulierte Signal (PWM1) in Abhängigkeit der Eingangsspannung (U_{IN}), der Ausgangsspannung (U_{OUT}) und des Gesamtausgangsstromes (I_{ges}) gebildet wird.

9. Verfahren nach Anspruch 7 oder 8, **dadurch gekennzeichnet, dass** das Tastverhältnis des zweiten pulsweitenmodulierten Signals (PWM2) gegenüber dem Tastverhältnis des ersten pulsweitenmodulierten Signals (PWM1) in der Weise geändert wird, dass die Ausschaltflanken des zweiten pulsweitenmodulierten Signals (PWM2) gegenüber den Ausschaltflanken des ersten pulsweitenmodulierten Signals (PWM1) voreilen oder nacheilen.

10. Verfahren nach Anspruch 6 oder 7, **dadurch gekennzeichnet, dass** das erste pulsweitenmodulierte Signal (PWM1) und das zweite pulsweitenmodulierte Signal (PWM2) zeitlich versetzt zueinander vorgegeben werden.
